# EUROPEAN PATENT SPECIFICATION

(11) **EP 0 674 082 B1**
(45) Date of publication and mention of the grant of the patent: **10.06.1998**
(21) Application number: 94830135.3
(22) Date of filing: 23.03.1994
(51) Int. Cl.: E06B 1/60, F16B 37/04

(54) **An adjustment device, in particular for metal frames**
Stellbare Vorrichtung, insbesondere für Metallrahmen
Dispositif d'ajustement, notamment pour cadres métalliques

(43) Date of publication of application: 27.09.1995
(73) Proprietor: A.T.P. ALUMINIO TECNOLOGIA Y PRODUCTO S.A., 08980 Sant Feliu de Llobregat (Barcelona) (ES)
(72) Inventor: Plaza Marti, Gemma, E-08010 Barcelona (ES)
(74) Representative: Lanzoni, Luciano

(56) References cited:
- WO-A-87/01419
- WO-A-87/01756
- CH-A- 400 520
- DE-B- 1 500 800
- FR-A- 2 375 480
- FR-A- 2 680 208
- US-A- 3 508 593

## Description

The invention relates to an adjustment device, in particular for metal frames. Such devices are well-known in the field of metal frames, and serve to aid mounting and adjustment operations of aluminium frames into brick walls.

An adjustment device is supplied and combined with each wall-fixing screw, and is aimed at enabling the operative to take up the space between the wall-frame and the aluminium frame. The device normally comprises two elements: a first element, or anchoring body, and a second element constituted by an externally-threaded cylindrical adjustment element, screwable on the first element. The whole assembly is stably applicable to the metal frame.

In known-type devices the anchoring body is conformed such as to be slidably couplable (and thus use the existing seats) to one of the joint channels defined by the tabs present on the internal surface. The body internal surface is threaded for the passage of the screw-adjustment element.

While the frame is being assembled, the anchoring body is slid into the joint channel, up until it reaches a hole made in the frame itself: then the screw element is inserted and passes through the body and the frame. Using a key on the screw element, it is then possible to take up all the play between the frame and the wallframe.

The main problem inherent in almost all known adjustment devices is connected with the order of assembly made necessary by its very configuration.

For example, the anchoring body has to be inserted before the frame is closed, and pre-bored seats have to be used, but might not be in the most suitable position for a consequent correct adjustment, leaving aside the question of warehouse costs to cope with the sheer number of differently-sized and shaped anchoring bodies required for the various sections of the frame parts.

The principal aim of the present invention is to obviate the above-described drawbacks by providing an adjustment device for metal frames which can be adapted to a large number of different frame parts. The adjustment device is also easy to mount and obtains a precise and lasting take-up of space.

The technical characteristics of the invention are fully described in the appended claims, and the advantages of the invention are clearly set out in the present description, making reference to the accompanying figures of the drawings, intended as a non-limiting example of the invention, and in which:
- figure 1 is a partial lateral section of the adjustment device applied to a part of a metal frame, with the device in an intermediate position;
- figure 2 shows the device of figure 1 in a perspective view from above;
- figure 3 shows an enlarged section of a part of the device of figure 2, and in particular an anchoring body, according two lines A and B at about 90 degrees to each other, in order better to illustrate the tabs provided on the body;
- figure 4 is a lateral view of the device with one part partially housed in the body of the device.

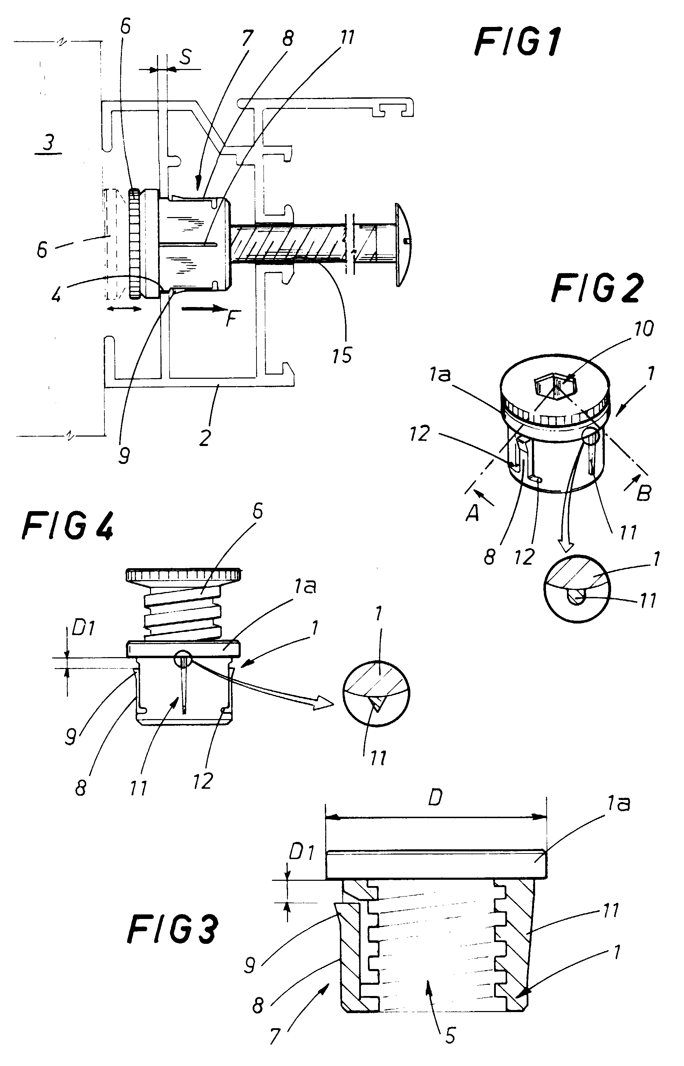

With reference to the drawings, and with particular reference to figure 1, the adjustment device is applicable on metal frames comprising a frame 2 which constituent frame parts have a section breadth S, and which frame is mounted in a wall frame 3, which might be made in masonry materials or wood.

The device comprises a cylindrical body 1 which is fixed to the frame 2, which frame 2 exhibits a through hole 4 for housing the body 1, said through hole 4 usually being made in the same zone of the frame as screw-holes 15 for the basic mounting of the frame 2 on the wall frame 3. The cylindrical body 1 also affords a threaded seat 5 (see also figure 3) coaxially receiving an adjustment element 6. The adjustment element 6 is externally threaded and at one end exhibits a seat 10 for an adjustment tool. Another end of the adjustment element 6 is arranged facing the wall frame 3 such that when the frame 2 is mounted the distance between said frame 2 and the wall frame 3 can be taken up.

The figures show how the cylindrical body 1 is provided with an end portion 1a having a diameter D which is greater than that of the rest of the body 1: the end portion 1a constitutes the end stop for the frame 2 during the initial adjustment device insertion phase. Further, the cylindrical body 1 is equipped, at its external surface, with axial and rotation blocking means 7 of the cylindrical body 1 in the through hole 4, which blocking means 7 comprise two pairs of longitudinal tabs, a first pair 8 and a second pair 11 each single tab being situated at 90 degrees to the next.

The first pair 8 of longitudinal tabs are elastic, at 180 degrees to each other and fashioned from the cylindrical body 1 itself. Each of them is provided with a head 9 projecting from the surface of the body 1 and distanced from the end portion 1a by a distance D1 equal to the breadth S of the frame 2. The head 9 is elastically mobile between a recessed position in which it passes through the hole 4 and a projecting position in which it axially blocks the cylindrical body 1 in the hole 4.

Each of the first tabs 8 is fahioned in the following way: a U-shaped cut 12 is made in the external surface of the body 1 and runs along it until a U-shaped strip, constituting one of the first tabs 8, is created. At the open ends of the U-shape described, the ends run outwardly at right angles for a short length so as fully to define the first tabs 8.

Each of the second tabs 11 projects from the external surface of the cylindrical body 1, at 180 degrees from the other. Figure 3 shows how the second tabs 11 taper longitudinally starting from the end portion 1a, such as to define an external swelling constituting a stable anti-rotation coupling point between the cylindrical body 1 and the frame 2.

The second tabs 11, in other embodiments, can be truncoconical (see figure 2) or truncopyramidal (see figure 4), according to the kind of penetration into the frame 2 required.

The device can thus be mounted on the frame 2, which is already provided with the through holes 4 for the adjustment elements.

The cylindrical bodies 1 are therefore manually inserted before the frame 2 is positioned in the wall frame 3, and if necessary can be tapped into place in the direction of arrow F in figure 1. The two tab pairs 8 and 11 render the seating secure, as, after the inserting operation, in which they are pressed flush against the cylindrical body 1, they snap out into locking positions, tabs 8 thus preventing axial movement and tabs 11 preventing rotational movement by penetrating into the body of the frame 2.

Then the frame 2 is mounted on the wall frame 3 (figure 1) and positioned correctly by adjusting the whole using the adjustment device of the invention. The threaded adjustment element 6 is screwed in or out by a key (not illustrated) so that it is interplaced between the frame 2 and the wall frame 3: once the best adjustment has been reached, the device is made solid to the wall frame 3 by a screw 15 passing coaxially internally to the cylindrical body 1 and the adjustment element 6, and screwed into the wall frame 3.

The device, then, improves the speed and accuracy of the whole frame mounting operation, and offers security and rigidity over a long time period. The special design of the cylindrical body 1 and its axial-rotational constraint means that the adjustment device can be used on various types of frame sections, independently of the presence of the tabs 8 and 11.

## Claims

1. An adjustment device for finely adjusting metal frames and wall frames receiving the metal frames, comprising:
- a cylindrical body (1) for fixing the device to a frame (2) provided with a through hole (4) for receiving said body (1); said body (1) afffording a threaded seat (5);
- an externally threaded adjustment element (6) for adjusting the device when in position between a metal frame (2) and a wall frame (3), which adjustment element (6) inserts screwingly into the cylindrical body (1);
- a seat (10) sunk into an end of the adjustment element (6), for receiving an adjustment tool;
- an end of the adjustment element (6) being in a position parallel to and facing the wall frame (3) so that a screwing adjustment of the adjustment element (6) shortens a distance between said end facing the wall frame (3) and the wall frame (3); characterised in that
the cylindrical body (1) is provided with an end portion (1a) having a diameter (D) which is greater than that of the body (1), and is also provided with means (7) for preventing axial and rotation movement of the cylindrical body (1) with respect to the through hole (4) comprising:
- a pair of first elastic longitudinal tabs 8, fashioned on opposite sides of the cylindrical body (1) at 180 degrees from each other; each of said first tabs (8) being provided with a head (9) projecting from said body (1) surface and distanced from the end portion (1a) by a diameter (D1) equal to a breadth (S) of the frame (2); said head (9) being mobile between a recessed position within the body (1) and a projecting position having a function of axially blocking the cylindrical body (1) in the through hole (4);
- at least a second pair of longitudinal tabs (11) projecting from the external surface of the cylindrical body (1) and fashioned on opposite sides of the cylindrical body (1) at 180 degrees from each other, and alternated with the first tabs (8) over the body (1) external surface; each of the second tabs (11) tapering inwards longitudinally, starting from the end portion (1a), such as to define an external swelling constituting a stable anti-rotation coupling point between the cylindrical body (1) and the frame (2).

2. A device as in claim 1, characterised in that each of the first tabs (8) originates from a U-shaped cut into the external surface of the cylindrical body (1), wherein two ends of the U-shaped cut perform a right-angled turn outwards from the U.

3. A device as in claim 1, characterised in that each of the second tabs (11) is provided with an external swelling having a truncoconical section.

4. A device as in claim 1, characterised in that each of the second tabs (11) is provided with an external swelling having a pyramidal section.

## Patentansprüche

1. Stellbare Vorrichtung zur Feineinstellung von Metallrahmen und von die Metallrahmen aufnehmenden Mauerrahmen, bestehend aus:
- einem zylindrischen Körper (1) zur Befestigung der Vorrichtung an einem Rahmen (2), welcher mit einer durchgehenden Bohrung (4) zur Aufnahme des genannten Körpers (1) versehen ist; wobei der genannte Körper (1) einen Gewindesitz (5) aufweist;
- einem aussen mit Gewinde versehenen Einstellelement (6) zum Einstellen der Vorrichtung, wenn diese sich in ihrer Position zwischen einem Metallrahmen (2) und einem Mauerrahmen (3) befindet, welches Einstellelement (6) einschraubbar in den zylindrischen Körper (1) eingesetzt wird;
- einem Sitz (10), der in ein Ende des Einstellelementes (6) versenkt ist und zur Aufnahme eines Einstellwerkzeuges dient;
- wobei ein Ende des Einstellelementes (6) sich in einer Position parallel zu und dem Mauerrahmen (3) zugewandt befindet, so dass eine Schraubverstellung des Einstellelementes (6) den Abstand zwischen dem genannten und dem Mauerrahmen (3) zugewandten Ende und dem Mauerrahmen (3) selbst verkürzt; **dadurch gekennzeichnet,** dass der zylindrische Körper (1) mit einem Endabschnitt (la) versehen ist, der einen Durchmesser (D) aufweist, welcher grösser ist als der des Körpers (1), und dass er ebenfalls mit Mitteln (7) versehen ist, um eine axiale Bewegung und eine Drehbewegung des zylindrischen Körpers (1) im Verhältnis zu der durchgehenden Bohrung (4) zu verhindern, enthaltend:
- ein Paar von ersten elastischen Längsflügeln (8), angearbeitet an entgegengesetzten Seiten des zylindrischen Körpers (1) und um 180° Grad einer vom anderen angeordnet; wobei jeder der genannten ersten Flügel (8) mit einem Kopf (9) versehen ist, der aus der Oberfläche des genannten Körpers (1) herausragt und von dem Endabsehnitt (1a) um einen Abstand (D1) entfernt ist, welcher der Stärke (S) des Rahmens (P) entspricht; und wobei der genannte Kopf (9) zwischen einer zurückgezogenen Position im Inneren des Körpers (1) und einer herausragenden Position beweglich ist und die Aufgabe hat, den zylindrischen Körpers (1) in der durchgehenden Bohrung (4) axial zu blockieren;
- wenigstens ein zweites Paar von Längsflügeln (11), die aus der äusseren Oberfläche des zylindrischen Körpers (1) herausragen und an entgegengesetzten Seiten des zylindrischen Körpers (1) um 180° Grad einer vom anderen angearbeitet sind, und die sich auf der äusseren Oberfläche des zylindrischen Körpers (1) mit den ersten Flügeln (8) abwechseln; wobei jeder der zweiten Flügel (11) sich in Längsrichtung nach innen hin verjüngt, ausgehend von dem Endabschnitt (la), so dass eine äussere Verdickung beschrieben wird, die einen stabilen drehfesten Verbindungspunkt zwischen dem zylindrischen Körper (1) und dem Rahmen (2) bildet.

2. Vorrichtung nach Patentanspruch 1, **dadurch gekennzeichnet**, dass jeder der ersten Flügel (8) durch einen U-fönnigen Einschnitt in die äussere Oberfläche des zylindrischen Körpers (1) hergestellt ist, wobei zwei Enden des U-förmigen Einschnittes einen von dem U nach aussen gebogenen rechten Winkel bilden.

3. Vorrichtung nach Patentanspruch 1, **dadurch gekennzeichnet**, dass jeder der zweiten Flügel (11) mit einer äusseren Verdikkung versehen ist, die einen stumpfkegelförmigen Querschnitt aufweist.

4. Vorrichtung nach Patentanspruch 1, **dadurch gekennzeichnet**, dass jeder der zweiten Flügel (11) mit einer äusseren Verdikkung versehen ist, die einen pyramidenförmigen Querschnitt aufweist.

## Revendications

1. Dispositif d'ajustement pour ajuster avec précision des cadres métalliques sur des dormants, comprenant :
- un corps cylindrique (1) pour fixer le dispositif à un cadre (2) présentant un trou débouchant (4) destiné à recevoir ledit corps (1) ; lequel corps (1) présente un logement taraudé (5) ;
- un élément de réglage (6) à filetage extérieur pour ajuster le dispositif quand il se trouve entre un cadre métallique (2) et un dormant (3), lequel élément de réglage (6) s'introduit par vissage dans le corps cylindrique (1) ;
- un logement (10) réalisé dans une extrémité de l'élément de réglage (6) et destiné à recevoir un outil de réglage ;
- une extrémité de l'élément de réglage (6) étant parallèle et face au dormant (3) de sorte qu'un vissage de ce même élément de réglage (6) réduise la distance entre ladite extrémité faisant face au dormant (3) et ce même dormant (3) ;
caractérisé en ce que
le corps cylindrique (1) a une portion finale (la), dont le diamètre (D) est supérieur à son propre diamètre, et est également doté de moyens (7) qui sont destinés à empêcher ce même corps cylindrique (1) d'effectuer un mouvement axial et de rotation par rapport au trou débouchant (4) et qui consistent en :
- une paire de premières pattes longitudinales élastiques (8), réalisées à 180 degrés l'une de l'autre sur des côtés opposés du corps cylindrique (1) ; chacune de ces premières pattes (8) étant dotée d'une tête (9) saillant de la surface du corps (1) en question et distante de la portion finale (la) d'une distance (D1) égale à l'épaisseur (S) du cadre (2) ; ladite tête (9) pouvant se déplacer entre une position rentrée à l'intérieur du corps (1) et une position en saillie dont la fonction est d'immobiliser axialement le corps cylindrique (1) dans le trou débouchant (4)
- au moins une deuxième paire de pattes longitudinales ; (11) saillant de la surface extérieure du corps cylindrique (1) et réalisées à 180 degrés l'une de l'autre sur des côtés opposés du corps cylindrique (1), en alternance avec les premières pattes (8) sur la surface extérieure de ce même corps (1) ; chacune des deuxièmes pattes (11) s'amenuisant longitudinalement vers l'intérieur, à partir de la portion finale (la), de façon à former un renflement extérieur qui constitue un point d'accouplement anti-rotation stable entre le corps cylindrique (1) et le cadre (2).

2. Dispositif selon la revendication 1, caractérisé en ce que chacune des premières pattes (8) est définie par une entaille en forme de U réalisée dans la surface extérieure du corps cylindrique (1), les deux extrémités de l'entaille en forme de U formant un angle droit par rapport au reste de l'entaille et étant orientées vers l'extérieur.

3. Dispositif selon la revendication 1, caractérisé en ce que chacune des deuxièmes pattes (11) présente un renflement extérieur de section tronconique.

4. Dispositif selon la revendication 1, caractérisé en ce que chacune des deuxièmes pattes (11) présente un renflement extérieur de section pyramidale.
